# EUROPÄISCHE PATENTSCHRIFT

(11) **EP 3 357 145 B1**
(45) Veröffentlichungstag und Bekanntmachung des Hinweises auf die Patenterteilung: **30.09.2020**
(21) Anmeldenummer: 16753264.7
(22) Anmeldetag: 25.07.2016
(51) Int. Cl.: H02K 5/18, H02K 5/20

(54) **GEHÄUSE FÜR EINE ELEKTRISCHE MASCHINE**
HOUSING FOR AN ELECTRIC MACHINE
BOÎTIER POUR MACHINE ÉLECTRIQUE

(30) Priorität: 28.09.2015 DE 102015218620
(43) Veröffentlichungstag der Anmeldung: 08.08.2018
(73) Patentinhaber: Robert Bosch GmbH, 70442 Stuttgart (DE)
(72) Erfinder: GOVINDASAMY, Karthick, Coimbatore 641017 (IN); CARRILLO, Camilo, 70193 Stuttgart (DE); GEISE, Stephan, 59602 Ruethen (DE); SCHOELLIG-ALT, Patrizia, 70806 Kornwestheim (DE)
(86) Internationale Anmeldenummer: PCT/EP2016/067690
(87) Internationale Veröffentlichungsnummer: WO 2017/054954

(56) Entgegenhaltungen:
- EP-A1- 2 122 166
- DE-A1- 10 141 693
- DE-A1- 19 939 013
- DE-A1-102012 205 754

## Beschreibung

### Stand der Technik

Die Erfindung geht aus von einem Gehäuse für eine elektrische Maschine nach der Gattung des Hauptanspruchs.

Aus der DE 10 2005 052 363 A1 ist ein Gehäuse für eine elektrische Maschine bekannt, mit einem topfförmigen Außengehäuse, einem in dem Außengehäuse angeordneten topfförmigen Innengehäuse und einem in radialer Richtung bezüglich einer Statorachse gesehen zwischen dem Außengehäuse und dem Innengehäuse gebildeten Mantelzwischenraum, in dem in Umfangsrichtung bezüglich der Statorachse verlaufende Kühlrippen zur Bildung eines spiralförmig verlaufenden Kühlkanals vorgesehen sind. Zwischen dem Boden des Außengehäuses und dem Boden des Innengehäuses ist ein Bodenzwischenraum gebildet. Im Boden des Innengehäuses ist ein Lager für die Rotorwelle angeordnet, das sich durch die Wärme der elektrischen Maschine erwärmt. Der spiralförmige Kühlkanal zur Kühlung des Lagers für die Rotorwelle ist nicht in den Bodenzwischenraum geführt. Die Kühlung des Lagers für die Rotorwelle kann dadurch noch verbessert werden. Außerdem sind die Herstellungskosten eines solchen Gehäuses vergleichsweise hoch, da die Kühlrippen als separates Kunststoffteil ausgebildet sind und im Mantelzwischenraum montiert werden müssen. Weiterer Stand der Technik ist DE 199 39 013 A1, DE 101 41 693 A1 und EP 2 122 166 B1.

### Vorteile der Erfindung

Das erfindungsgemäße Gehäuse mit den kennzeichnenden Merkmalen des Hauptanspruchs hat demgegenüber den Vorteil, dass die Kühlung des im Boden des Innengehäuses angeordneten Lagers verbessert wird, indem im Mantelzwischenraum mehrere, in axialer Richtung verlaufende Kühlrippen vorgesehen sind, die sich in den Bodenzwischenraum erstrecken und im Bodenzwischenraum in radialer Richtung verlaufen. Außerdem werden die Herstellungskosten verringert, da die mehreren, in axialer Richtung verlaufenden Kühlrippen im Gegensatz zu den spiralförmigen Kühlrippen leicht entformbar und damit einstückig am Außen- oder Innengehäuse ausführbar sind.

Durch die in den Unteransprüchen aufgeführten Maßnahmen sind vorteilhafte Weiterbildungen und Verbesserungen des im Hauptanspruch angegebenen Gehäuses möglich.

Nach einer vorteilhaften Ausführung sind die Kühlrippen einstückig an dem Außengehäuse ausgebildet, da die Kühlkanäle auf diese Weise besonders einfach und kostengünstig herstellbar sind.

Besonders vorteilhaft ist, dass die Kühlrippen vom Mantelzwischenraum ausgehend jeweils durchgehend bis in den Bodenzwischenraum verlaufen, da auf diese Weise ein mäanderförmiger Verlauf des Kühlkanals unter Einbeziehung einer Stirnseite des Gehäuses erzielbar ist. Dadurch wird eine bessere Kühlung des Bodens des Innengehäuses und des im Boden des Innengehäuses angeordneten Lagers erreicht.

Die Kühlrippen sind derart angeordnet und ausgebildet, dass sich ein Kühlkanal ergibt, der von einem Kühlkanaleingang mäanderförmig zu einem Kühlkanalausgang verläuft. Auf diese Weise werden die Herstellungskosten für das Gehäuse der elektrischen Maschine verringert.

Es sind Paare von benachbarten Kühlkanälen vorgesehen, die im Bodenzwischenraum eine die beiden Kühlkanäle verbindende Durchgangsöffnung aufweisen. Auf diese Weise wird eine Umlenkung des Kühlkanals im Bodenzwischenraum erreicht.

Auch vorteilhaft ist, wenn das Innengehäuse an seinem Boden einen in vom Boden des Außengehäuses abgewandter Richtung verlaufenden Bodenabsatz aufweist, in den ein Bodenabsatz des Außengehäuses abdichtend hineinragt, und dass das Innengehäuse an seiner dem Boden abgewandten Stirnseite einen an den Innenumfang des Außengehäuses reichenden Absatz hat. Durch diese Ausführung wird zwischen dem Außengehäuse und dem Innengehäuse ein abgeschlossener Raum gebildet, der als Kühlzwischenraum bezeichnet ist und den Mantelzwischenraum und den Bodenzwischenraum umfasst.

Darüber hinaus vorteilhaft ist, wenn das Außengehäuse aus Aluminium oder Kunststoff, insbesondere Polyamid oder Polypropylen, hergestellt ist, da sich das Außengehäuse mit den einstückig daran ausgebildeten Kühlrippen auf diese Weise besonders kostengünstig durch Gießen oder Spritzgießen herstellen lässt.

Desweiteren vorteilhaft ist, wenn der Kunststoff des Außengehäuses Glasfasern enthält und/oder eine Schaumstruktur aufweist. Durch die im Material des Außengehäuses vorgesehenen Glasfasern wird das Außengehäuse mechanisch stabiler und verzieht sich weniger, so dass das Innengehäuse unter Einhaltung der Form- und Lagetoleranzen auf den Kühlrippen des Außengehäuses aufliegt und diese weitgehend abdichtet, so dass keine oder nur geringfügige Leckagen in dem mäanderförmigen Kühlkanal auftreten. Durch eine Schaumstruktur des Materials des Außengehäuses wird eine dämpfende Wirkung am Außengehäuse erreicht, so dass ungewollte Geräusche durch am Außengehäuse anliegende Bauteile vermieden werden. Zusätzlich vermindert der Schaum die Schwindung und den Verzug des Außengehäuses bei der Abkühlung des Außengehäuses im Spritzgießwerkzeug. Die Schaumstruktur des Außengehäuses wird erreicht, indem dem aufzuschäumenden Kunststoff beim Spritzgießen ein Treibmittel zugeführt wird. Nach der Herstellung weist die Wand des Außengehäuses im Querschnitt einen geschäumten Kern mit einer kompakten Randschicht auf.

Vorteilhaft ist, wenn das Innengehäuse aus Blech, insbesondere Stahlblech hergestellt ist, da das Innengehäuse auf diese Weise eine besonders gute Wärmeleitfähigkeit aufweist, um die Wärme aus dem Lager über den Kühlkanal des Gehäuses effektiv abführen zu können. Außerdem lässt sich das Innengehäuse auf diese Weise kostengünstig durch beispielsweise Tiefziehen herstellen. Darüber hinaus weist ein Innengehäuse aus Blech eine hohe Temperaturbeständigkeit auf.

### Zeichnung

Ein Ausführungsbeispiel der Erfindung ist in den Figuren vereinfacht dargestellt und in der nachfolgenden Beschreibung näher erläutert.
- Fig.1: zeigt eine Schnittansicht des erfindungsgemäßen Gehäuses,
- Fig.2: eine weitere Schnittansicht des Gehäuses nach Fig.1 und
- Fig.3: eine Schnittansicht des Außengehäuses nach Fig.1.

### Beschreibung des Ausführungsbeispiels

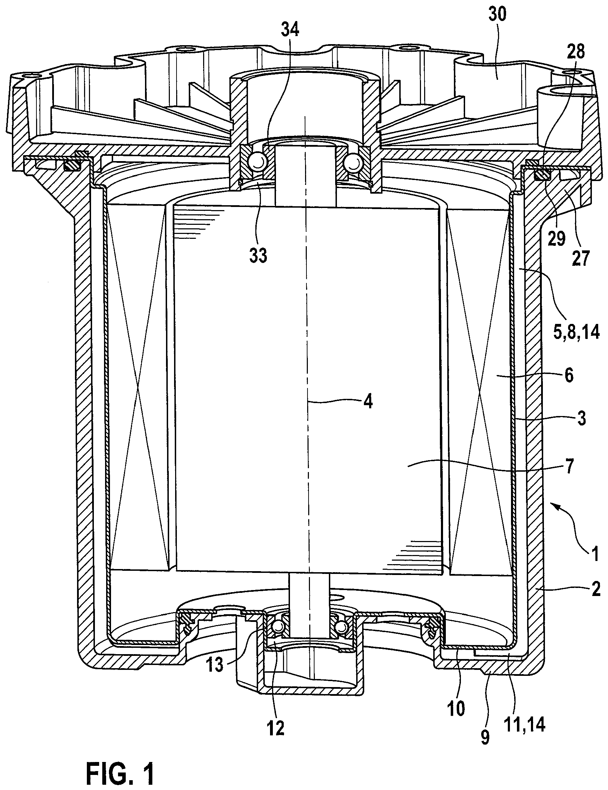

Fig.1 zeigt eine Schnittansicht des erfindungsgemäßen Gehäuses.

Das erfindungsgemäße Gehäuse 1 ist ein Gehäuse einer elektrischen Maschine und dient dazu, einen Stator 6 und einen Rotor 7 der elektrischen Maschine aufzunehmen und die Wärme der elektrischen Maschine abzuführen.

Das Gehäuse 1 umfasst ein Außengehäuse 2 und ein in dem Außengehäuse 2 angeordnetes Innengehäuse 3. Zwischen dem Außengehäuse 2 und dem Innengehäuse 3 ist in radialer Richtung bezüglich einer Statorachse 4 gesehen ein Mantelzwischenraum 5 gebildet, in dem Kühlrippen 8 vorgesehen sind.

Das Außengehäuse 2 und das Innengehäuse 3 sind jeweils topfförmig ausgebildet und weisen jeweils einen Boden 9,10 auf. Zwischen dem Boden 9 des Außengehäuses 2 und dem Boden 10 des Innengehäuses 3 ist ein Bodenzwischenraum 11 gebildet, der mit dem Mantelzwischenraum 5 strömungsverbunden ist. Auf diese Weise bilden der Mantelzwischenraum 5 und der Bodenzwischenraum 11 einen zusammenhängenden Kühlzwischenraum 14.

Am Boden 10 des Innengehäuses 3 ist eine Aufnahme 12 für ein Rotorwellenlager 13 , beispielsweise für ein Wälzlager 13, vorgesehen.

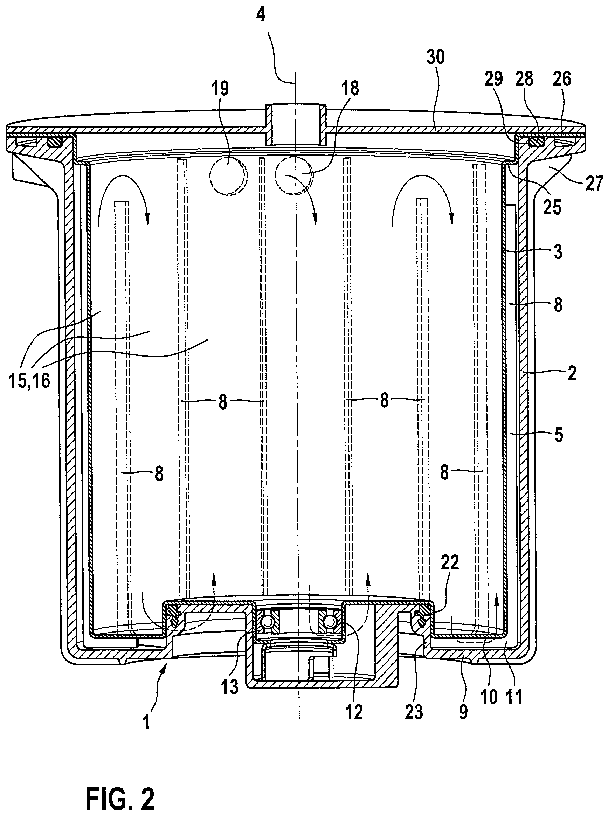

Fig.2 zeigt eine weitere Schnittansicht des Gehäuses 1 nach Fig.1, bei der der Stator 6 und der Rotor 7 nicht dargestellt sind.

Erfindungsgemäß sind im Mantelzwischenraum 5 mehrere, in Umfangsrichtung des Gehäuses 1 voneinander beabstandete, in axialer Richtung verlaufende Kühlrippen 8 vorgesehen, die sich in den Bodenzwischenraum 11 erstrecken und im Bodenzwischenraum 11 in radialer Richtung verlaufen. Die Kühlrippen 8 teilen den Kühlzwischenraum 14 in einen mäanderförmigen Kühlkanal 15. Die Kühlrippen 8 sind also derart im Kühlzwischenraum 14 angeordnet und ausgebildet, dass der Kühlkanal 15 von einem Kühlkanaleingang 18 mäanderförmig zu einem Kühlkanalausgang 19 verläuft. Der Kühlkanaleingang 18 und der Kühlkanalausgang 19 sind beispielsweise am Umfang des Außengehäuses 2 angeordnet.

Nach dem Ausführungsbeispiel sind die Kühlrippen 8 einschließlich der sich in den Bodenzwischenraum 11 erstreckenden Rippenabschnitte einstückig an dem Außengehäuse 2 ausgebildet. Dabei verlaufen die Kühlrippen 8 vom Mantelzwischenraum 5 ausgehend jeweils durchgehend bis in den Bodenzwischenraum 11, mit anderen Worten also vom Innenumfang des Außengehäuses 2 ausgehend durchgehend bis an die dem Innengehäuse 3 zugewandte Innenseite des Bodens 9 des Außengehäuses 2.

Das Außengehäuse 2 ist beispielsweise aus Aluminium oder Kunststoff, insbesondere Polyamid oder Polypropylen, hergestellt. Dadurch kann das Außengehäuse 2 mit den einstückig daran ausgebildeten Kühlrippen 8 kostengünstig durch Gießen oder Spritzgießen hergestellt werden. Der Kunststoff des Außengehäuses 2 kann Glasfasern enthalten und/oder eine Schaumstruktur aufweisen. Die Glasfasern können beispielsweise Glasfasern mit einer Länge zwischen 3 bis : 10 mm sein.

Die Schaumstruktur im Material des Außengehäuses 2 wird erreicht, indem dem aufzuschäumenden Kunststoff beim Spritzgießen ein Treibmittel zugeführt wird.

Das topfförmige Innengehäuse 3 liegt derart auf den Kühlrippen 8 auf, dass keine oder nur geringfügige Leckagen zwischen benachbarten Kühlkanalabschnitten 16 auftreten.

Beim Betrieb einer das erfindungsgemäße Gehäuse 1 umfassenden elektrischen Maschine erwärmt sich das Rotorwellenlager 13, wobei die Wärme vom Rotorwellenlager 13 über das Innengehäuse 3 durch Wärmeleitung zum Bodenzwischenraum 11 und von dort über den mäanderförmigen Kühlkanal 15 abtransportiert werden kann. Um eine gute Wärmeleitung zu erreichen, kann das Innengehäuse 2 aus Blech, insbesondere Stahlblech, hergestellt sein.

Das Innengehäuse 3 hat an seinem Boden 10 einen in vom Boden 9 des Außengehäuses 2 abgewandter Richtung verlaufenden Bodenabsatz 22, in den ein Bodenabsatz 23 des Außengehäuses 2 abdichtend hineinragt. Außerdem weist das Innengehäuse 3 an seiner dem Boden 10 abgewandten Stirnseite einen an den Innenumfang des Außengehäuses 2 reichenden Absatz 25 auf. Dadurch wird zwischen dem Außengehäuse 2 und dem Innengehäuse 3 ein abgeschlossener Kühlzwischenraum 14 gebildet. Der Absatz 25 des Innengehäuses 3 liegt an dem Außengehäuse 2 an und hat an seinem dem Boden 10 abgewandten Ende eine Schulter 26, die an einer flanschartigen Schulter 27 des Außengehäuses 2 anliegt. Zwischen der Schulter 26 des Innengehäuses 3 und der Schulter 27 des Außengehäuses 2 ist eine Dichtung 28, insbesondere ein Dichtring, vorgesehen. Die Dichtung 28 ist beispielsweise in einer ringförmigen Nut 29 der Schulter 27 des Außengehäuses 2 angeordnet. Das topfförmige Außen- und Innengehäuse 2,3 wird an der offenen Stirnseite von einem Gehäusedeckel 30 dicht verschlossen, an dem eine zweite Aufnahme 33 für ein zweites Rotorwellenlager 34 vorgesehen sein kann.

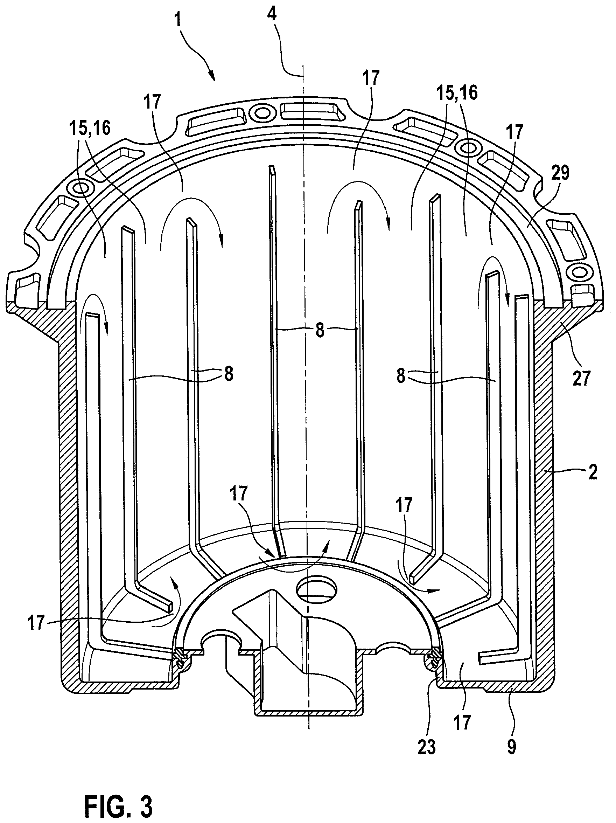

Fig.3 zeigt eine Schnittansicht des Außengehäuses nach Fig.1.

Im Kühlzwischenraum 14 sind Paare von benachbarten, zwischen den Kühlrippen 8 gebildeten Kühlkanalabschnitten 16 vorgesehen, die im Bodenzwischenraum 11 eine die beiden Kühlkanalabschnitte 16 verbindende Durchgangsöffnung 17 aufweisen. Nach dem Ausführungsbeispiel verlaufen die Kühlrippen 8 im Bodenzwischenraum 11 in Umfangsrichtung gesehen abwechselnd entweder bis an den Bodenabsatz 23 des Außengehäuses 2 oder enden vor dem Bodenabsatz 23 des Außengehäuses 2, um jeweils die Durchgangsöffnung 17 zu einem der benachbarten Kühlkanalabschnitte 16 und damit den mäanderförmigen Kühlkanal 15 zu bilden.
Außerdem sind im Kühlzwischenraum 14 andere Paare von benachbarten, zwischen den Kühlrippen 8 gebildeten Kühlkanalabschnitten 16 vorgesehen, die an der den Böden 9,10 abgewandten Stirnseite des Gehäuses 1 jeweils eine die beiden Kühlkanalabschnitte 16 verbindende Durchgangsöffnung 17 aufweisen.

## Patentansprüche

1. Gehäuse für eine elektrische Maschine, mit einem Außengehäuse (2), einem in dem Außengehäuse (2) angeordneten Innengehäuse (3) und einem in radialer Richtung bezüglich einer Statorachse (4) gesehen zwischen dem Außengehäuse (2) und dem Innengehäuse (3) gebildeten Mantelzwischenraum (5), in dem mehrere Kühlrippen (8) vorgesehen sind, wobei das Außen-und das Innengehäuse (2,3) topfförmig ausgebildet sind und jeweils einen Boden (9,10) aufweisen, wobei zwischen dem Boden (9) des Außengehäuses (2) und dem Boden (10) des Innengehäuses (3) ein Bodenzwischenraum (11) gebildet ist, **dadurch gekennzeichnet, dass** die Kühlrippen (8) im Mantelzwischenraum (5) in axialer Richtung verlaufen, sich in den Bodenzwischenraum (11) erstrecken und im Bodenzwischenraum (11) in radialer Richtung verlaufen und dass die Kühlrippen (8) derart angeordnet und ausgebildet sind, dass sich ein Kühlkanal (15) ergibt, der von einem Kühlkanaleingang (18) mäanderförmig zu einem Kühlkanalausgang (19) verläuft und dass Paare von benachbarten Kühlkanalabschnitten (16) vorgesehen sind, die im Bodenzwischenraum (11) eine die beiden Kühlkanalabschnitte (16) verbindende Durchgangsöffnung (17) aufweisen.

2. Gehäuse nach Anspruch 1, **dadurch gekennzeichnet, dass** die Kühlrippen (8) einstückig an dem Außengehäuse (2) ausgebildet sind.

3. Gehäuse nach einem der vorhergehenden Ansprüche, **dadurch gekennzeichnet, dass** die Kühlrippen (8) vom Mantelzwischenraum (5) ausgehend jeweils durchgehend bis in den Bodenzwischenraum (11) verlaufen.

4. Gehäuse nach einem der vorhergehenden Ansprüche, **dadurch gekennzeichnet, dass** das Innengehäuse (3) an seinem Boden (10) einen in vom Boden (9) des Außengehäuses (2) abgewandter Richtung verlaufenden Bodenabsatz (22) aufweist, in den ein Bodenabsatz (23) des Außengehäuses (2) abdichtend hineinragt, und dass das Innengehäuse (3) an seiner dem Boden (10) abgewandten Stirnseite einen an den Innenumfang des Außengehäuses reichenden Absatz (25) aufweist.

5. Gehäuse nach einem der vorhergehenden Ansprüche, **dadurch gekennzeichnet, dass** das Außengehäuse (2) aus Aluminium oder Kunststoff, insbesondere Polyamid oder Polypropylen, hergestellt ist.

6. Gehäuse nach Anspruch 5, **dadurch gekennzeichnet, dass** der Kunststoff des Außengehäuses (2) Glasfasern enthält und/oder eine Schaumstruktur aufweist.

7. Gehäuse nach einem der vorhergehenden Ansprüche , **dadurch gekennzeichnet, dass** das Innengehäuse (2) aus Blech, insbesondere Stahlblech hergestellt ist.

8. Elektrische Maschine mit einem Gehäuse nach einem der vorhergehenden Ansprüche.

## Claims

1. Housing for an electric machine, having an outer housing (2), an inner housing (3) disposed in the outer housing (2), and a casing intermediate space (5) which, when viewed in the radial direction in terms of a stator axis (4), is formed between the outer housing (2) and the inner housing (3) and in which a plurality of cooling ribs (8) are provided, wherein the outer housing (2) and the inner housing (3) are configured so as to be pot-shaped and have in each case one base (9, 10), wherein a base intermediate space (11) is formed between the base (9) of the outer housing (2) and the base (10) of the inner housing (3), **characterized in that** the cooling ribs (8) in the casing intermediate space (5) run in the axial direction, extend in the base intermediate space (11), and in the base intermediate space (11) run in the radial direction, and **in that** the cooling ribs (8) are configured and disposed in such a manner that a cooling duct (15) results, said cooling duct (15) in a meandering manner running from a cooling duct inlet (18) to a cooling duct outlet (19), and **in that** pairs of neighbouring cooling duct portions (16) which in the base intermediate space (11) have a passage opening (17) that connects the two cooling duct portions (16) are provided.

2. Housing according to Claim 1, **characterized in that** the cooling ribs (8) are configured in one piece on the outer housing (2).

3. Housing according to one of the preceding claims, **characterized in that** the cooling ribs (8), proceeding from the casing intermediate space (5), each run continuously into the base intermediate space (11).

4. Housing according to one of the preceding claims, **characterized in that** the inner housing (3) on the base (10) thereof has a base step (22) which runs in the direction facing away from the base (9) of the outer housing (2) and into which a base step (23) of the outer housing (2) protrudes in a sealing manner, and **in that** the inner housing (3) on the end side thereof that faces away from the base (10) has a step (25) which reaches up to the internal circumference of the outer housing.

5. Housing according to one of the preceding claims, **characterized in that** the outer housing (2) is produced from aluminium or plastics material, in particular polyamide or polypropylene.

6. Housing according to Claim 5, **characterized in that** the plastics material of the outer housing (2) contains glass fibres and/or has a foam structure.

7. Housing according to one of the preceding claims, **characterized in that** the inner housing (2) is produced from sheet metal, in particular sheet steel.

8. Electric machine having a housing according to one of the preceding claims.

## Revendications

1. Boîtier pour une machine électrique, comprenant un boîtier extérieur (2), un boîtier intérieur (3) agencé dans le boîtier extérieur (2) et un espace intermédiaire d'enveloppe (5) formé en direction radiale par rapport à un axe de stator (4) entre le boîtier extérieur (2) et le boîtier intérieur (3), dans lequel plusieurs nervures de refroidissement (8) sont prévues, le boîtier extérieur et le boîtier intérieur (2, 3) étant configurés en forme de pot et comprenant chacun un fond (9, 10), un espace intermédiaire de fond (11) étant formé entre le fond (9) du boîtier extérieur (2) et le fond (10) du boîtier intérieur (3), **caractérisé en ce que** les nervures de refroidissement (8) passent en direction axiale dans l'espace intermédiaire d'enveloppe (5), s'étendent dans l'espace intermédiaire de fond (11) et passent en direction radiale dans l'espace intermédiaire de fond (11), et **en ce que** les nervures de refroidissement (8) sont agencées et configurées de telle sorte qu'un canal de refroidissement (15) soit obtenu, qui passe depuis une entrée de canal de refroidissement (18) en méandres jusqu'à une sortie de canal de refroidissement (19), et **en ce que** des paires de sections de canal de refroidissement voisines (16) sont prévues, qui présentent dans l'espace intermédiaire de fond (11) une ouverture de passage (17) reliant les deux sections de canal de refroidissement (16).

2. Boîtier selon la revendication 1, **caractérisé en ce que** les nervures de refroidissement (8) sont configurées d'un seul tenant sur le boîtier extérieur (2) .

3. Boîtier selon l'une quelconque des revendications précédentes, **caractérisé en ce que** les nervures de refroidissement (8) passent en partant de l'espace intermédiaire d'enveloppe (5) à chaque fois en continu jusque dans l'espace intermédiaire de fond (11).

4. Boîtier selon l'une quelconque des revendications précédentes, **caractérisé en ce que** le boîtier intérieur (3) comprend sur son fond (10) un épaulement de fond (22) passant dans une direction détournée du fond (9) du boîtier extérieur (2), dans lequel un épaulement de fond (23) du boîtier extérieur (2) avance de manière étanche, et **en ce que** le boîtier intérieur (3) comprend sur son côté frontal détourné du fond (10) un épaulement (25) s'étendant sur la périphérie intérieure du boîtier extérieur.

5. Boîtier selon l'une quelconque des revendications précédentes, **caractérisé en ce que** le boîtier extérieur (2) est fabriqué en aluminium ou en matière plastique, notamment en polyamide ou polypropylène.

6. Boîtier selon la revendication 5, **caractérisé en ce que** la matière plastique du boîtier extérieur (2) contient des fibres de verre et/ou présente une structure de mousse.

7. Boîtier selon l'une quelconque des revendications précédentes, **caractérisé en ce que** le boîtier intérieur (2) est fabriqué en tôle, notamment en tôle d'acier.

8. Machine électrique comprenant un boîtier selon l'une quelconque des revendications précédentes.
